# EUROPÄISCHE PATENTANMELDUNG

(11) **EP 1 130 730 A2**
(43) Veröffentlichungstag der Anmeldung: **05.09.2001**
(21) Anmeldenummer: 01104341.1
(22) Anmeldetag: 23.02.2001
(51) Int. Cl.: H02G 3/04

(54) **Fahrzeug mit einem Installationskanal**

(30) Priorität: 01.03.2000 DE 10009640
(71) Anmelder: DETHLEFFS GmbH, D-88316 Isny (DE)
(72) Erfinder: Schmidt, Gerhard, 88316 Isny (DE)
(74) Vertreter: Patentanwälte Eisele, Otten, Roth & Dobler

(57) **Zusammenfassung**

Die Erfindung betrifft ein Fahrzeug, insbesondere Wohnmobil oder Wohnwagen mit einem Installationskanal (2). Hierbei soll mit geringem Verlegeaufwand eine Vielzahl von Installationsleitungen verlegt werden.

## Beschreibung

Die Erfindung betrifft ein Fahrzeug, insbesondere Wohnmobil oder Wohnwagen mit einem Installationskanal.

Bei derartigen Fahrzeugen ist der Installationskanal als ein-oder mehrteiliger Kanal oder abdeckbarer Schacht ausgebildet. In diesem Schacht sind die Installationsleitungen frei verlegt und gegebenenfalls durch Klammern oder Kabelbinder aneinander oder an Befestigungsstellen gehalten. Aus der DE 39 08 310 A1 ist ein Installationskanal bekannt, der in seinen Wänden Hohlräume besitzt, die als Kanäle ausgebildet sind und unterschiedliche Querschnitte aufweisen können. Diese Kanäle wirken als Wärmedämmschicht, wenn sie mit Luft gefüllt sind. Durch eine Füllung der Hohlräume mit einem strömenden Fluid kann im Kabelkanal auftretende Wärme rasch abgeführt werden.

Diese Installationskanäle weisen jedoch wesentliche Nachteile auf. So müssen die Installationsleitungen immer einzeln in den Installationskanälen verlegt werden bzw. in die Installationskanäle eingezogen werden. Dieses Verfahren ist aufwendig. Weiterhin ist bei einer solchen Vorgehensweise schwer vorherzubestimmen, welche Leitung insbesondere in Biegungen und Kurven nebeneinander zu liegen kommen. Ein Verlängern der im Installationskanal verlegten Leitungen kann schließlich nur durch ein Verlängern jeder einzelnen Leitung erfolgen. Weiterhin geht aus der DE 39 08 310 A1 nicht hervor, wie ein Installationskanalabschnitt an einen folgenden Installationskanalabschnitt koppelbar ist, wenn die in den Wänden angeordneten Kanäle ein Fluid enthalten.

Der Erfindung liegt die Aufgabe zugrunde, mit geringem Verlegeaufwand eine Vielzahl von Installationsleitungen zu verlegen und/oder zu kuppeln, die Anordnung der Installationsleitungen zueinander mit geringem Aufwand sicherzustellen und Zuführ- und/oder Abführeinrichtungen mit geringem Aufwand an beliebigen Stellen des Installationskanals einbauen zu können.

Diese Aufgabe wird ausgehend von den Merkmalen des Oberbegriffs des Patentanspruchs 1 erfindungsgemäß dadurch gelöst, dass der Installationskanal aus mindestens einem Hohlprofil ausgebildet ist, das wenigstens zwei in Längsrichtung von Profilwänden umschlossene Kammern aufweist, die Kanäle bilden, wobei diese insbesondere als Leitungen bzw. Installationsleitungen für Fluide, insbesondere Wasser und/oder Luft dienen. Durch diesen Aufbau des Installationskanals wird auf einfache Weise ein Körper ausgebildet, der mindestens zwei bohrungsartige Durchgänge besitzt, die von einem Medium durchströmbar sind. Kern der Erfindung ist ein Baukastensystem für einen Installationskanal mit mehreren Installationsleitungen.

Eine vorteilhafte Ausbildung des Erfindungsgegenstandes sieht vor, dass die im Profil ausgebildeten Leitungen unterschiedliche Querschnittsflächen und/oder unterschiedliche Querschnittsgeometrien aufweisen. Beispielsweise ist für einen Abwasserkanal eine große Querschnittsfläche mit abgerundeter Querschnittsgeometrie vorgesehen, damit im Abwasser enthaltene Partikel den Kanal ohne Hindernisse durchströmen können und keine Verstopfungen hervorrufen.

Gemäß einer besonderen Ausführungsform des Erfindungsgegenstandes ist es vorgesehen, Kanäle, die von Fluiden mit unterschiedlichen Kenngrößen durchströmt werden, in ihrer räumlichen Anordnung aufeinander anzupassen. So ist es beispielsweise vorteilhaft, im Installationskanal angeordnete Warmwasser- und Kaltwasserkanäle durch einen Luftkanal voneinander zu trennen, so dass der Warmwasserkanal gegenüber dem Kaltwasserkanal isoliert ist. Weiterhin ist es vorteilhaft, den Warmwasserkanal und einen Abwasserkanal nebeneinander anzuordnen, da so der Abwasserkanal bei niedrigen Außentemperaturen vor dem Einfrieren schützbar ist.

Die Idee des Baukastenprinzips ist vorteilhaft dann verwirklicht, wenn die einzelnen Installationskanalstücke über Kupplungsflansche verfügen. Solche Installationskanalabschnitte können insbesondere, wenn die Kupplungsflansche als Klebe- und/oder Steckflansche vorliegen, mit geringem Aufwand miteinander verbunden werden.

Weiterhin ist es vorteilhaft, wenn Installationskanalabschnitte vorliegen, die einen gebogenen, gekrümmten oder abgewinkelten Verlauf aufweisen. Mit Hilfe solcher Installationskanalabschnitte ist es möglich, einen Installationskanal beliebigen Verlaufs auszubilden. Eine zweckmäßige Ausgestaltung des Erfindungsgegenstandes sieht vor, Installationskanalabschnitte mit Flanschstücken und oder einem Siffon auszubilden. Durch eine solche Ausbildung ist das Abführen und/oder Zuführen von Medien in die einzelnen Kanäle ohne Bearbeitung des Installationskanalabschnitts möglich.

Gemäß einer besonders vorteilhaften Ausführungsform bilden mehrere Hohlprofile eine Ringleitung, der eine Zu- und/oder Abführeinheit bzw. Versorgungs- und/oder Entsorgungseinheit zwischengeschaltet ist. Somit ist es möglich, den Installationskanal von einer zentralen Stelle aus zu ent-bzw. versorgen.

Gemäß einer besonderen Ausführungsform ist es vorgesehen, dass die Ringleitung mit einer Reinigungsvorrichtung verbindbar ist. Hierdurch ist es möglich, sämtliche Kanäle, beispielsweise vor oder nach langen Stillstandszeiten des Fahrzeugs mit geringem Aufwand durchzuspülen.

Erfindungsgemäß wird weiter vorgeschlagen, die Zu- und Abführeinheit mit mindestens einem Fördermittel, das vorzugsweise als Pumpe oder Ventilator ausgebildet ist, auszustatten. Hierdurch kann von zentraler Stelle aus beispielsweise ein Warmwasserversorgungskreis gesteuert werden.

Schließlich sieht die Erfindung vor, dass der Installationskanal zur Außenseite hin offene Schächte aufweist, in denen die Aufnahme von Kabeln möglich ist. Hierdurch können beispielsweise auch elektrische und/oder optische Leitungen in den Installationskanal integriert werden.

Zum Schutz vor Frostschäden ist es vorgesehen, im Profil des Installationskanals mindestens ein Heizelement, vorzugsweise einen Heizdraht anzuordnen, der flüssige Medien, wie z. B. Kaltwasser vor dem Einfrieren schützt.

Weiterhin ist es vorgesehen, um eine besonders wirksame Isolierung zu erzielen, einzelne Kanäle mit Isoliermaterial zu füllen. So können beispielsweise die den Warmwasserkanal umgebenden Kanäle ausgeschäumt sein.

Eine besonders einfache Verlegung des Installationskanals ist möglich, wenn im Fahrzeug ein entsprechender Schacht zur Aufnahme des Installationskanals vorgesehen ist. Hierdurch ist es möglich, Erweiterungen und/oder Änderungen des Kanalsystems und/oder Wartungsarbeiten am Kanalsystem in kürzester Zeit auszuführen.

Weitere Einzelheiten der Erfindung werden in der Zeichnung anhand von schematisch dargestellten Ausführungsbeispielen beschrieben. Hierbei zeigt:
- Fig. 1: eine perspektivische Ansicht eines Abschnitts eines Installationskanals;
- Fig. 2: eine perspektivische Ansicht eines weiteren Abschnitts eines Installationskanals;
- Fig. 3: eine perspektivische Ansicht eines Installationskanals mit Anschlussstücken;
- Fig. 4: eine perspektivische Ansicht eines weiteren Installationskanals mit Anschlussstücken;
- Fig. 5: eine perspektivische Ansicht einer dritten Variante eines Installationskanals mit Anschlussstücken;
- Fig. 6: eine perspektivische Ansicht einer vierten Variante eines Installationskanals mit Anschlussstücken;
- Fig. 7: eine perspektivische Ansicht eines Ringkanals;
- Fig. 8: einen Querschnitt durch einen ringförmigen Installationskanal.

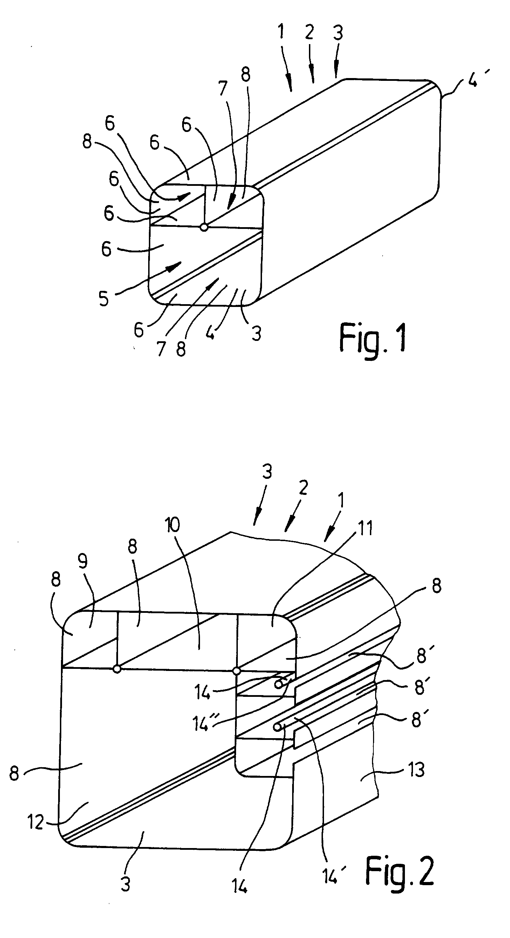

Figur 1 zeigt einen Installationskanalabschnitt 1 eines Installationskanals 2. Der Installationskanalabschnitt 1 ist als Hohlprofil 3 ausgebildet. Das Hohlprofil 3 ist an gegenüberliegenden Seiten 4, 4' offen ausgebildet und weist einen Innenraum 5 auf. Der Innenraum 5 ist durch Profilwände 6 in Kammern 7 aufgeteilt. Die Kammern 7 sind als Kanäle 8 ausgebildet.

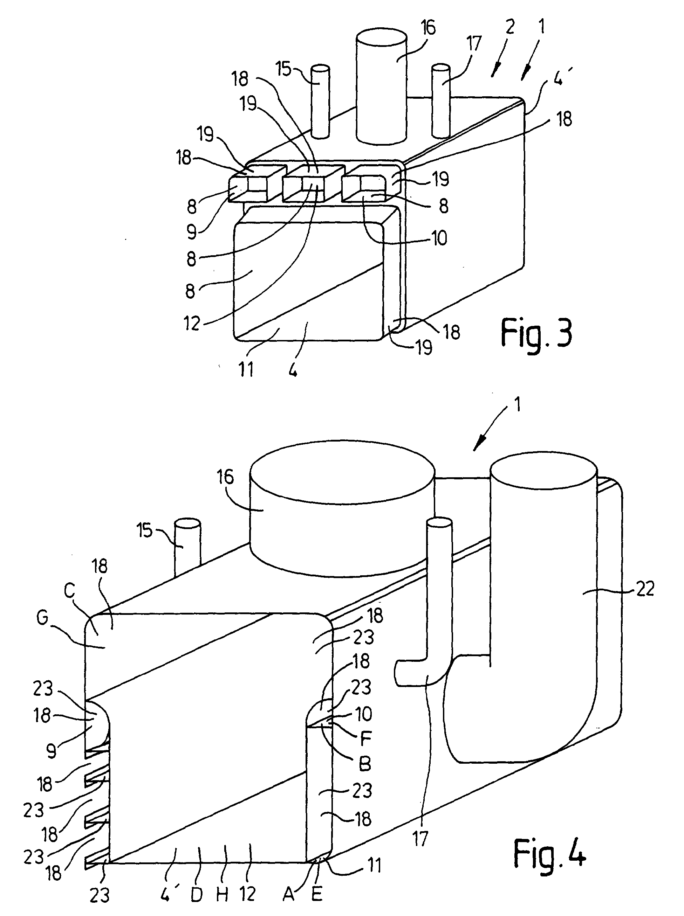

Figur 2 zeigt eine perspektivische Ansicht eines Installationskanalabschnitts 1 eines weiteren Installationskanals 2. Der Installationskanalabschnitt 1 ist als Hohlprofil 3 ausgebildet und weist Kanäle 8 auf. Die Kanäle 8 sind als Warmwasserkanal 9, Kaltwasserkanal 10, Luftkanal 11 und Abwasserkanals 12 ausgebildet. Weiterhin weist das Hohlprofil 3 offene Kanäle 8' auf, die zu einer Längsseite 13 des Hohlprofils 3 geöffnet sind. Die offenen Kanäle 8' sind zur Aufnahme von Kabeln 14, insbesondere elektrischen Leitungen 14' und/oder optischen Leitungen 14'' vorgesehen.

Figur 3 zeigt eine perspektivische Ansicht eines Installationskanalabschnitts 1 mit Anschlussstücken 15, 16, 17. Die Anschlussstücke 15, 16, 17 sind jeweils mit einem der geschlossenen Kanäle 8 verbunden. Der als Warmwasserkanal 9 ausgeführte geschlossene Kanal 8 ist mit dem Anschlussstück 15 verbunden. Somit besteht die Möglichkeit, Warmwasser aus dem Warmwasserkanal 9 über das Anschlussstück 15 zu entnehmen. Hierbei ist das Anschlussstück 15 vorzugsweise über eine nicht dargestellte Leitung mit einem nicht dargestellten Wasserhahn einer nicht dargestellten Bordküche eines Wohnmobils verbunden. Das Anschlussstück 17 ist vorzugsweise über eine weitere nicht dargestellte Leitung ebenfalls mit dem Wasserhahn der Bordküche verbunden und versorgt diesen aus einem Kaltwasserkanal 10. Über ein nicht dargestelltes Abflussrohr ist der Abfluss der Bordküche vorzugsweise mit dem Anschlussstück 16 verbunden und wird über dieses in einen Abwasserkanal 12 entwässert. Weiterhin weist das Hohlprofil 3 einen Luftkanal 11 auf, auf den an einer nicht dargestellten Stelle zugegriffen wird.

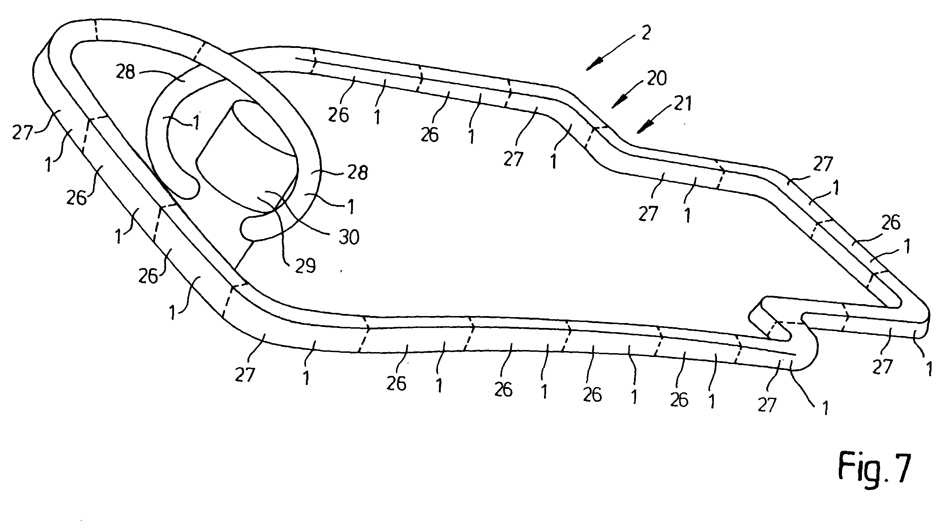

Die Kanäle 9, 10, 11, 12 enden zur Stirnseite 4 als Flansche 18 mit Kupplungsnasen 19. Eine Stirnseite 4' des Installationskanalabschnitts ist mit hier nicht sichtbaren Kupplungsaufnahmen versehen, in welche die Kupplungsnasen eines weiteren nicht dargestellten Installationskanalabschnitts einsteckbar sind. Auf diese Weise ist es möglich, aus einzelnen Installationskanalabschnitten 1 einen Installationskanal 2 bzw. einen langen Kanal 20 bzw. einen Ringkanal 21 (siehe Figur 7) herzustellen.

Gemäß einem nicht dargestellten Ausführungsbeispiel ist es vorgesehen, einzelne Installationskanalabschnitte mit einem Klebe- und/oder Dichtmittel, das auf die Außenseite der Kupplungsnasen aufgebracht wird, zu verkleben. Weiterhin ist es vorgesehen, die Kupplungsnasen und Kupplungsaufnahmen als Steckverbindungen auszubilden. Hierzu ist es insbesondere vorgesehen, die einzelnen Kupplungsnasen und/oder Kupplungsaufnahmen mit einem Dichtungsring zu versehen.

Figur 4 zeigt eine perspektivische Ansicht eines weiteren Installationskanalabschnitts 1 mit Anschlussstücken 15, 16, 17, 22. Das Anschlussstück 15 steht in Verbindung mit einem Warmwassserkanal 9, das Anschlussstück 16 steht in Verbindung mit einem Abwasserkanal 12, das Anschlussstück 17 steht in Verbindung mit einem Kaltwasserkanal 10 und das Anschlussstück 22 steht in Verbindung mit einem Luftkanal 11. An einer Stirnseite 4' weist der Installationskanalabschnitt 1 Flansche 18 auf, die als Kupplungsaufnahmen 23 für den Eingriff von hier nicht dargestellten Kupplungsnasen eines weiteren Installationskanalabschnitts ausgebildet sind. Weiterhin besitzen die geschlossenen Kanäle 8 unterschiedliche Querschnittsflächen A, B, C, D und unterschiedliche Querschnittsgeometrien E, F, G, H.

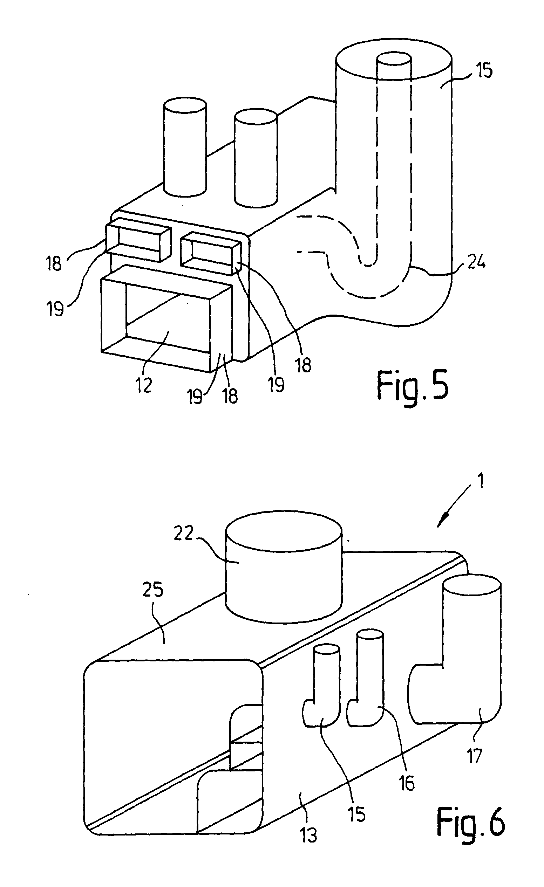

Die Figur 5 zeigt eine perspektivische Ansicht einer weiteren Variante eines Installationskanalabschnitts 1. In Figur 5 ist ein Abwasserkanal 12 mit einem Anschlussstück 15 verbunden. Das Anschlussstück 15 ist als Siffon 24 ausgeführt, so dass Gerüche aus dem Abwasserkanal 12 nicht über das Anschlussstück 15 entweichen können.

In Figur 6 ist eine weitere Variante einer perspektivischen Ansicht eines Installationskanalabschnitts 1 dargestellt. Bei diesem Installationskanalabschnitt 1 sind einer Längsseite 13 drei Anschlussstücke 15, 16, 17 zugeordnet. Ein weiteres Anschlussstück 22 ist einer nach oben weisenden Längsseite 25 des Installationskanalabschnitts 1 zugeordnet.

Figur 7 zeigt eine perspektivische Ansicht eines Installationskanals 2. Dieser lange Kanal 20 ist aus einzelnen Installationskanalabschnitten 1 zum dem Ringkanal 21 zusammengesetzt. Im Einzelnen besteht der Ringkanal 21 aus geraden Installationskanalabschnitten 26 und vorzugsweise um 90° gebogenen Installationskanalabschnitten 27. Über flexible Installationskanalabschnitte 28 ist der Ringkanal 21 mit einer Versorgungseinheit 29 und einer Entsorgungseinheit 30 verbunden.

Gemäß einer nicht dargestellten Ausführungsvariante ist es vorgesehen, den gesamten Ringkanal 21 aus einem einzelnen oder mehreren flexiblen Installationskanalabschnitten zusammenzusetzen. Eine weitere Ausführungsvariante sieht vor, den Ringkanal 21 oder Teilbereiche des Ringkanals 21 aus einem gebogenen Stranggussprofil herzustellen.

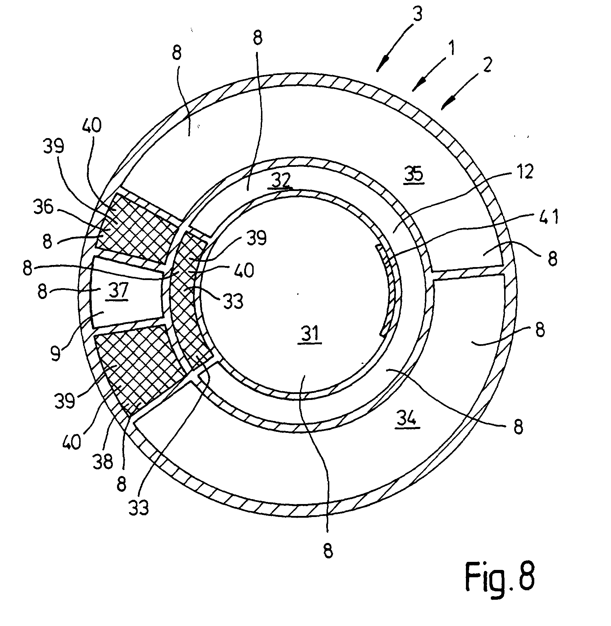

Figur 8 zeigt einen Querschnitt durch einen ringförmigen Installationskanal 2. Der Installationskanal 2 besitzt acht geschlossene Kanäle 8. Diese sind als ringförmiger Kanal 31 und teilringförmige Kanäle 32 bis 38 ausgeführt. Hierbei ist es vorzugsweise vorgesehen, den teilringförmigen Kanal 37 als Warmwasserkanal 9 auszuführen und die Kanäle 33, 36, 38 mit einem isolierenden Material 39 bzw. einem Isolierschaum 40 auszufüllen. Der ringförmige Kanal 31 ist vorzugsweise als Abwasserkanal 12 ausgeführt und besitzt ein vorzugsweise elektrisch betriebenes Heizelement 41, das ein Einfrieren des Abwassers bei niedrigen Temperaturen verhindert. Gemäß einem nicht dargestellten Ausführungsbeispiel sind die Heizelemente der einzelnen Installationskanalabschnitte über Steckkontakte miteinander verbunden, wobei die einzelnen Steckkontakte beim Zusammenfügen der Installationskanalabschnitte miteinander in Verbindung kommen.

Alternativ ist es vorgesehen, die Anschlusskontakte für das Heizelement eines Installationskanals an eine Längsseite des Installationskanalabschnitts zu führen. Auf diese Weise können einzelne Abschnitte eines Installationskanals gezielt beheizt werden. So ist es beispielsweise möglich, den Installationskanal nur in einem Bereich, in dem er an einer der Außentemperatur stark exponierten Stelle verläuft, zu beheizen.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch vor, dass die Beheizung eines Kanals durch mindestens einen in einer Profilwand verlaufenden Heizdraht erfolgt.

Weiterhin sieht die Erfindung vor, mit Hilfe von weichenartigen Installationskanalabschnitten eine Verzweigung des Installationskanals in zwei oder mehrere Installationskanäle vorzunehmen. Hierbei ist vorzugsweise vorgesehen, dass die Leitungen über mindestens einen weichenartigen Installationskanalabschnitt wieder zusammenführbar sind. Die Verzweigung kann so vorgesehen sein, dass beispielsweise ein Installationskanal mit fünf Kammern durch die Verzweigung in zwei Installationskanäle mit je fünf Kammern verzweigbar ist. Alternativ ist beispielsweise daran gedacht, einen Installationskanal mit fünf Kammern durch die Verzweigung in einen Installationskanal mit zwei Kammern und einen Installationskanal mit drei Kammern aufzuteilen.

### Bezugszeichenliste:

- 1: Installationskanalabschnitt
- 2: Installationskanal
- 3: Hohlprofil
- 4, 4': Stirnseite
- 5: Innenraum
- 6: Profilwand
- 7: Kammer
- 8: geschlossener Kanal
- 8': offener Kanal
- 9: Warmwasserkanal
- 10: Kaltwasserkanal
- 11: Luftkanal
- 12: Abwasserkanal
- 13: Längsseite
- 14: Kabel
- 14': elektrische Leitung
- 14": optische Leitung
- 15: Anschlussstück
- 16: Anschlussstück
- 17: Anschlussstück
- 18: Flansch
- 19: Kupplungsnase
- 20: Kanal
- 21: Ringkanal
- 22: Anschlussstück
- 23: Kupplungsaufnahme
- 24: Siffon
- 25: Längsseite
- 26: gerader Installationskanalabschnitt
- 27: gebogener Installationskanalabschnitt
- 28: flexibler Installationskanalabschnitt
- 29: Versorgungseinheit
- 30: Entsorgungseinheit
- 31: ringförmiger Kanal
- 32-38: teilringförmiger Kanal
- 39: Isoliermaterial
- 40: Schaum
- 41: Heizelement

## Patentansprüche

1. Fahrzeug, insbesondere Wohnmobil oder Wohnwagen mit einem Installationskanal, **dadurch gekennzeichnet**, dass der Installationskanal (2) aus mindestens einem Installationskanalabschnitt (1, 26, 27, 28) bzw. Hohlprofil (3) ausgebildet ist, das wenigstens zwei in Längsrichtung von Profilwänden (6) umschlossene Kammern (7) aufweist, die Kanäle (8) bilden, wobei diese insbesondere als Leitungen (9-12) für Fluide, insbesondere Wasser und/oder Luft dienen.

2. Fahrzeug nach Anspruch 1, **dadurch gekennzeichnet**, dass der Installationskanal (2) Kammern (7) unterschiedlicher Querschnittsfläche (A, B, C, D) und/oder unterschiedlicher Querschnittsgeometrie (E, F, G, H) aufweist.

3. Fahrzeug nach einem der vorhergehenden Ansprüche, **dadurch gekennzeichnet**, dass der Installationskanal (2) einen Warmwasserkanal (9) und einen Kaltwasserkanal (10) aufweist, wobei die beiden Kanäle (9, 10) durch einen Luftkanal (11) räumlich voneinander getrennt sind.

4. Fahrzeug nach einem der vorhergehenden Ansprüche, **dadurch gekennzeichnet**, dass der Installationskanal (2) einen Warmwasserkanal (9) und einen Abwasserkanal (12) aufweist, wobei die beiden Kanäle (9, 12) aneinandergrenzen.

5. Fahrzeug nach einem der vorhergehenden Ansprüche, **dadurch gekennzeichnet**, dass die Kanäle (8-12) an Stirnseiten (4, 4') des Hohlprofils als Flansche (18), insbesondere mit Kupplungsnasen (19) und/oder Kupplungsaufnahmen (23) ausgebildet sind.

6. Fahrzeug nach einem der vorhergehenden Ansprüche, **dadurch gekennzeichnet**, dass der Installationskanalabschnitt (1, 27) einen bogenförmigen Verlauf aufweist.

7. Fahrzeug nach einem der vorhergehenden Ansprüche, **dadurch gekennzeichnet**, dass der Installationskanal (2) an mindestens einer Längsseite (13, 25) mindestens ein Anschlussstück (15, 16, 17, 22) und/oder einen Siffon (24) aufweist.

8. Fahrzeug nach einem der vorhergehenden Ansprüche, **dadurch gekennzeichnet**, dass der Installationskanal (2) mindestens einen zu einer Außenseite offenen Kanal (8') aufweist, der insbesondere zur Aufnahme von Kabeln (14, 14', 14'') dient.

9. Fahrzeug nach einem der vorhergehenden Ansprüche, **dadurch gekennzeichnet**, dass in einem Kanal (8) des Hohlprofils (3) und/oder in bzw. an einer Profilwand des Hohlprofils (3) ein Heizelement (41) insbesondere ein Heizdraht angeordnet ist.

10. Fahrzeug nach einem der vorhergehenden Ansprüche, **dadurch gekennzeichnet**, dass der Installationskanal (2) mindestens einen Kanal (8-12) aufweist, der durch ein isolierendes und/oder wärmeleitendes Medium und/oder Material (39, 40) ausgefüllt ist.

11. Fahrzeug nach einem der vorhergehenden Ansprüche, **dadurch gekennzeichnet**, dass in einem Boden und/oder Wänden des Fahrzeugs ein Schacht zur Aufnahme des Installationskanals (2, 20, 21) oder eines Installationskanalabschnitts (1) vorgesehen ist.

12. Fahrzeug nach einem der vorhergehenden Ansprüche, **dadurch gekennzeichnet**, dass mehrere Installationskanalabschnitte (1, 26, 27 ,28) eine Ringkanal (21) bilden.

13. Fahrzeug nach Anspruch 12, **dadurch gekennzeichnet**, dass der Ringkanal (21) in einer Versorgungs- und/oder Entsorgungseinheit (29, 30) beginnt bzw. endet.

14. Fahrzeug nach Anspruch 12 oder 13, **dadurch gekennzeichnet**, dass der Ringkanal (21) mit einer Reinigungsvorrichtung verbindbar ist.

15. Fahrzeug nach Anspruch 12, 13 oder 14, **dadurch gekennzeichnet**, dass die Versorgungs- und/oder Entsorgungseinheit (29, 30) mindestens ein Fördermittel, insbesondere eine Pumpe und/oder einen Ventilator umfaßt.
